Europäisches Patentamt

European Patent Office

Office européen des brevets

(19)

(11) Publication number: **0 392 324**
**A2**

# (12) EUROPEAN PATENT APPLICATION

(21) Application number: **90106388.3**

(22) Date of filing: **03.04.90**

(51) Int. Cl.5: **G21B 1/00**

(30) Priority: **13.04.89 JP 94851/89**

(43) Date of publication of application:
**17.10.90 Bulletin 90/42**

(84) Designated Contracting States:
**DE FR GB**

(71) Applicant: **SEMICONDUCTOR ENERGY
LABORATORY CO., LTD.**
**398 Hase**
**Atsugi-shi Kanagawa-ken, 243(JP)**

(72) Inventor: **Yamazaki, Shunpei,**
**21-21, Kitakarasuyama, 7-chome,**
**Setagaya-ku,**
**Tokyo 157(JP)**

(74) Representative: **Patentanwälte Grünecker,**
**Kinkeldey, Stockmair & Partner**
**Maximilianstrasse 58**
**D-8000 München 22(DE)**

(54) **Electrochemical nuclear fusion method.**

(57) A method of producing an electrochemical nuclear fusion reaction comprises the steps of introducing in a reaction vessel a solution containing heavy water, so that a pair of electrodes disposed in the reaction vessel are immersed in the solution, and applying electrical energy across the electrodes to produce an electrochemical reaction for a nuclear fusion reaction at a high pressure of 1.3 to 200 atm which is caused by confining in the reaction vessel deuterium and oxygen, which are the products of the electrochemical reaction.

FIG.1

EP 0 392 324 A2

# ELECTROCHEMICAL NUCLEAR FUSION METHOD

## BACKGROUND OF THE INVENTION

### Field of the Invention

The present invention relates to a method of attaining improved reliability in the implementation of a nuclear fusion reaction, and specifically to a method of controlling the extent of that nuclear fusion reaction.

### Description of the Prior Art

A nuclear fusion reaction by electrochemical process, which is referred to as cold nuclear fusion, has been attained and reported by S.E. Jones et al. The paper is entitled "Observation of Cold Nuclear Fusion in Condensed Matter" and was authored by S.E. Jones, E.P. Palmer, J.B. Crirr, D.L. Decler, G.L. Jensen, J.M. Thorne, S.F. Taylor, (all of Brigham Young University), and J. Rafelski (University of Arizona).

In this reaction, a pair of electrodes comprising a palladium or titanium cathode and a gold or platinum anode are inserted into a solution containing heavy water, and a DC voltage is applied across these electrodes. In addition, the electrochemical nuclear fusion reaction is carried out at an atmospheric pressure.

Because of the fact that this reaction is carried out at the atmospheric pressure, there is little possibility that deuterium (D) atoms combine with other deuterium atoms to produce the nuclear fusion.

In addition, the reaction tends to occur in one localized section of the electrodes, and then the nuclear reaction would occur in that localized section from the rise in temperature at that point.

Also, palladium which is used as a catalyst for combining the deuterium atoms is easily poisoned to form a poisoned film, and it is difficult to break down the poisoned film to produce a uniform nuclear fusion. For this reason, there is a high degree of variation and a lack of reproducibility in the nuclear fusion reaction. In addition, because of the occurrence of electrochemical side reactions which takes place simultaneously with the nuclear fusion, most of the products of the reaction decompose and the deuterium is eventually released into the atmosphere. As a result, the amount of deuterium actually used in the nuclear fusion reaction is considerably less than expected. Therefore, a method of reliably controlling the nuclear fusion reaction with a high probability of nuclear fusion occurring is further required.

## SUMMARY OF THE INVENTION

An object of the present invention is to provide, with due consideration to the drawbacks of such conventional methods, a method by which it is possible to reliably implement an electrochemical nuclear fusion reaction by maintaining the reaction environment under high pressure.

A further object of the present invention is to provide a method by which it is possible to control the extent of the nuclear fusion reaction.

A further object of the present invention is to provide an apparatus in which it is possible to reliably implement an electrochemical nuclear fusion reaction by maintaining the reaction environment under high pressure and controlling the extent of the nuclear fusion reaction.

These objects are achieved in the present invention by the provision of a method wherein the reaction vessel is maintained at a pressure higher than atmospheric pressure, specifically, at a predetermined pressure of 1.3 to 200 atm, and this pressure can be produced by confining in that reaction vessel the deuterium and oxygen, which are produced as a gaseous material in the electrochemical reaction.

In the present invention, the thermal energy produced in this reaction is transferred into a heat transfer medium which is passing through a heat exchanger in the reaction vessel. By conducting this heat transfer medium from the reaction vessel, it is possible to remove the energy, in particular the thermal energy from the nuclear fusion reaction for use as a simple thermal energy source in industrial applications such as electrical generation, heating, and the like.

## BRIEF DESCRIPTION OF THE DRAWINGS

These and other objects, features, and advantages of the present invention will become more apparent from the following description of the preferred embodiments taken in conjunction with the accompanying drawings, in which:

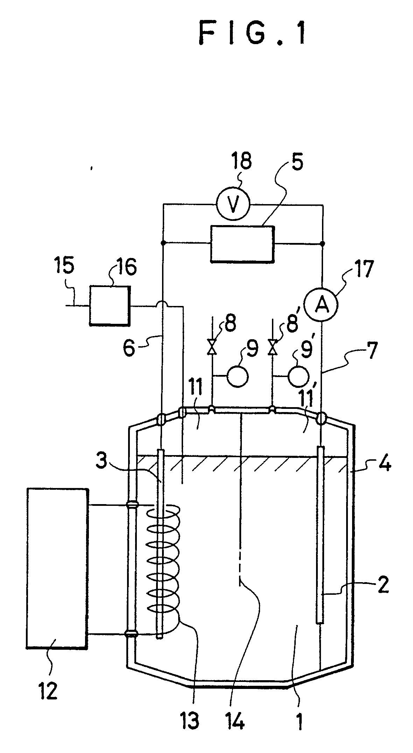

FIG. 1 is a schematic diagram of a device for experimental execution of the method of the present invention.

## DETAILED DESCRIPTION OF THE PREFERRED EMBODIMENTS

The present invention provides a reaction method and an apparatus by which it is possible to implement an electrochemical nuclear fusion reaction under a higher pressure than atmospheric pressure.

The process in the present invention is carried out in a reaction vessel into which a pair of electrodes are incorporated. Specifically, for example, palladium or titanium is used for the cathode and gold or platinum for the anode of the electrodes in the present invention.

A pressurized reaction vessel is used for the reaction vessel to accommodate a solution which contains heavy water or deuterum.

A DC voltage in the form of a continuous DC voltage or a pulsed-type DC voltage from a power source is applied between the electrodes.

A pair of heat exchangers are provided to remove the energy of nuclear fusion from the pressurized reaction vessel in order to prevent the excessive increase in temperature within the reaction vessel.

Further, a shield plate is inserted between the electrodes to prevent mixing of deuterum ($D_2$) and oxygen ($O_2$) which are produced through reaction, thus preventing the generation of heat from a further chemical reaction.

The deuterium and oxygen may be used to increase the pressure in the reaction vessel by making the reaction vessel in a hermetic structure.

In the process of the present invention, a solution of heavy water ($D_2O$) or deuterium (D) containing a predetermined metal salt is introduced between the electrodes in the reaction vessel. This metal salt is selected from the group of $FeSO_4 \cdot 7H_2O$, $NiCl_2 \cdot 6H_2O$, $PdCl_2$, $CaCO_3$, $LiSO_4$, $NaSO_4 \cdot 10H_2O$, $CaH_4(PO_4)_2 \cdot H_2O$, $TiSO_4 \cdot H_2SO_4 \cdot 8H_2O$ and $AuCN$. Specifically, 0.03 to 0.3 gm of the salt, for example, 0.13 gm of the salt is added to 100 gm of the heavy water.

In addition, $HNO_3$ is added to the solution to adjust the pH of the solution to 3 or lower.

An external voltage is applied across the electrodes, and atoms of deuterium (D or d) are created at the palladium cathode while oxygen is produced at the anode. Here, a DC current or a pulsed DC voltage is applied to the electrodes. A neutron counter is positioned close to the reaction vessel to provide evidence to confirm the occurence of nuclear fusion.

The neutrons (n) are detected on the cathode side to expect the following reaction:
$$d + d \rightarrow {}^3He(0.82MeV) + n(2.45MeV)$$
In addition to the reaction above, the following reaction can be expected to occur at the same time:
$$d + d \rightarrow P(3.02MeV) + t(1.01MeV)$$
As a result of nuclear fusion, an increase in temperature of the heavy water solution is observed. The number of neutrons with an energy of 2.6 MeV is not necessarily large, but their existence can be detected with a neutron spectrometer.

Furthermore, the extent of the creation of neutrons and the extent of the temperature rise is seen to increase as the pressure in the reaction vessel increases.

In comparison with the case where the reaction is carried out at atmospheric pressure, the nuclear fusion reaction is obviously accelerated when the reaction at the cathode is implemented under high pressure. The pressurization can be varied over the range from 1.3 atm to 200 atm provided that normal atmospheric pressure is equivalent to one atm. The reaction can, of course, be implemented at greater pressures, but in such a case there is some danger of an explosion occurring, and it can be assumed that the danger increases with the increase in the efficiency of the reaction.

When nuclear fusion takes place under pressure the neutrons cause the subsequent nuclear fusion by breeding, which may lead to an atomic explosion. Therefore, to prevent the occurrence of the atomic explosion, the extent of the electrochemical reaction must be controlled. For this reason, an adequately higher voltage than the voltage necessary for the reaction is applied, and the duration of application of the voltage is pulsed and controlled corresponding to the nuclear fusion reaction condition, whereby the reaction is controlled so as not to exceed the nuclear fusion critical value.

Specifically, the voltage is applied at 1 to 1000 pulses per minute and the pulse width is also varied from 0.1% to 100%. The 100% pulse width means a continuous state, which is referred to as DC continuous voltage. As a result, in the case where DC continuous voltage is applied, the existence of nuclear fusion is observed even at as little as 20 V. In the case where a DC pulsed voltage is applied, with a sufficiently high voltage, for example, 30 to 100 V, and especially, for example, at 40 V, and also with a duty ratio of 50% and a frequency of 30 times per minute, it is possible to suppress or control the extent of the nuclear fusion. Here, the term "duty ratio of 50%" means that voltage is applied for 50% of a single cycle with no voltage applied for the other 50% of the cycle.

The present invention will become more clear by the following examples.

## EXAMPLE 1

Now referring to FIG. 1, which illustrates the nuclear fusion reaction vessel used in the present invention, a pressurized reaction vessel 4 was used for the nuclear fusion reaction vessel, and a solution 1 which essentially consisted of heavy water and a salt added to the heavy water was enclosed in the pressurized reaction vessel 4. A pair of electrodes 2, 3 fabricated of gold and palladium respectively were used in the reaction vessel 4. A DC voltage in the form of a continuous DC voltage or a pulsed-type DC voltage from a power source 5 was applied between the palladium electrode 3 as the cathode and the gold electrode 2 as the anode.

A pair of heat exchangers 12, 13 were provided to remove the energy of nuclear fusion from the vessel 4 in order to prevent the increase in temperature within the reaction vessel from proceeding too far. The heat exchanger 13, which was a spiral-type heat exchanger, was positioned adjacent to the palladium electrode (cathode) 3. A shield plate 14 fabricated from lithium glass was inserted between the electrodes 12, 13 to prevent mixing of deuterum ($D_2$) 11 and oxygen ($O_2$) 11$'$ which were produced through reaction, thus preventing the generation of heat from a chemical reaction.

The deuterium and oxygen were used to increase the pressure in the reaction vessel. In addition, a pair of safety valves 8, 8$'$ and a pair of pressure gauges 9, 9$'$ were provided for adjustment of the pressure. The DC power source 5 was connected to the electrodes 3, 2 respectively through a pair of leads 6, 7. The leads 6, 7 were electrically isolated from the reaction vessel 4.

In this example, the reaction vessel 4 produced for an experiment purpose was sized so that at most about 20 cc of reactants could be charged into the reaction vessel 4. However, if this nuclear fusion reaction are to be used for industrial purposes, the size of the reaction vessel can be increased, so that a charge of 10 to $10^4$ times this amount may be accommodated, or it would be possible to use a plurality of such small reaction vessels juxtaposed. In addition, a supplementary supply of the solution 1 may be continuously charged into the reaction vessel 4 from an external source 15 of solution through a pressure charging system 16.

In this experiment example, 10 cc of heavy water ($D_2O$) containing a salt were charged into the high pressure reaction vessel 4. The salt used was $NiCl_2 \cdot 6H_2O$, which was added in the ratio of 0.13 vol% of the heavy water. The pH of the solution was adjusted to 2.8 by the addition of nitric acid. A continuous DC voltage was applied between the palladium electrode as the cathode and as the anode.

In the experiment, deuterium ($D_2$) was produced at the cathode and neutrons were detected by a neutron counter (omitted from the drawing). At this time, when the reaction was occurring at atmospheric pressure, a count of only about 5, in another words 3 to 10, was observed at an energy of 2.5 MeV but, for example, when the pressure was increased to 3 atm, the count number increased by about 4 times.

In addition, water was circulated through the heat exchangers 12, 13, and heat generation in this circulated water was clearly observed. The deuterium 11 and oxygen 11$'$ generated from this pressurized nuclear fusion reaction were not released to atmosphere but were confined within the high-pressure reaction vessel 4 to increase the pressure therein. A predetermined pressure can desirably be maintained by ejecting through the safety valves any gaseous materials which were not required. In this example, oxygen gas was ejected as unnecessary gaseous material. This release of oxygen was also made to prevent a secondary electrochemical heat generation reaction between deuterium and oxygen in the pressurized state to prevent a sudden generation of heat.

It was found in Example 1 that deuterium adhered to the cathode 3 during the reaction when the voltage is increased to 40V. However, when the deuterium was adhering to the palladium electrode 3, the result was a trend toward diminishment of the area of the palladium electrode 3. This was observed experimentally. Therefore, the reaction could not be kept uniform over the total electrode area. Because of this, the breeding by neutrons generated from parts of the reaction concentrated in localized areas caused more positive nuclear fusion reaction in the areas.

It was also found in Example 1 that when the reaction was carried on for one hour, surface poisoning occurred in the palladium electrode 3 and thereafter an adequate nuclear fusion reaction could not be produced at the same voltage.

In this example, it was also found important to remove any catalyst poison which prevents the catalytic reaction on the palladium side.

EXAMPLE 2

The embodiment in Example 2 was carried out in the same manner as Example 1 except that the voltage applied at the power source 5 was increased to 50 V as detected at the voltmeter 18. This caused the electric current through the line 7 to increase as detected at the ammeter 17.

Taking into consideration of the localized reaction as mentioned above in Example 1, an alternative experimental procedure was adopted, that is, a voltage sufficient to produce the nuclear fusion reaction was applied, and a pulse width duty ratio of 100% (DC voltage) was not used, but rather the duty ratio was varied in a range less than 100%, so that a nuclear fusion reaction occurred intermittently. The term "pulse width duty ratio" means the period of time in ratio through which voltage is applied during one cycle.

Therefore, the reaction was produced uniformly over the entire cathode of palladium electrode 3 and it was also possible to control the extent of the nuclear fusion reaction, inasmuch as the breeding was not caused by subsequent neutrons. Therefore it was expected that the generation of nuclear fusion could desirably be controlled. Specifically, in Example 2, a DC voltage of 50 V was applied and the duty ratio was varied from 10% to 90%. For example, a 50% duty ratio was attained wherein 50 V was applied between the two electrodes during 50% of the time period over one minute,.

By varying the duty ratio from 10% to 90% to intermittently apply a higher voltage, the number of neutrons was also increased in proportion. Consequently, in Example 2, it was possible even after 10 hours to obtain a satisfactory nuclear fusion reaction at the same voltage as initially applied, and the temperature in the circulated water correspondingly rose from room temperature to 40°C. It was recognized that the palladium electrode was prevented from being poisoned, and any poisoned film was substantially not produced.

By means of the present invention, it has become possible to continuously carry on an artificial nuclear fusion reaction, controlling the extent of the reaction, which had been deemed impossible to perform in the past. For this reason, the present invention has extremely large industrial implications.

The efficiency of the heat exchangers to remove energy from the reaction vessel can further be increased, so that removal as boiling water at 100°C to 150°C is possible by improving and making scale-up the nuclear fusion reaction device. These are also modifications of the present invention.

In addition, other modifications are possible within the scope of the present invention.

## Claims

1. A method of producing an electrochemical nuclear fusion reaction comprising the steps of:
providing a reaction vessel,
providing the reaction vessel with a pair of electrodes disposed therein,
introducing in the reaction vessel a solution containing at least one member selected from the group of heavy water and deuterium, so that the pair of electrodes are immersed in the solution; and
applying electrical energy across the electrodes to produce an electrochemical reaction for a nuclear fusion reaction at a high pressure greater than atmospheric pressure in the reaction vessel.

2. The method of Claim 1, wherein the reaction vessel is maintained in a hermetically sealed state; and the high pressure in the reaction vessel is produced by confining deuterium and oxygen, which are the products of the electrochemical reaction, whereby the nuclear fusion reaction is carried out under the high pressure.

3. The method of Claim 1, wherein the high pressure is maintained at 1.3 to 200 atm, and the electrical energy is applied with a duty ratio of 0.1% to 100%.

4. A method of producing an electrochemical nuclear fusion reaction comprising the steps of applying electrical energy to a solution containing at least one member selected from the group of heavy water and deuterium to produce an electrochemical reaction for a nuclear fusion reaction at a high pressure greater than atmospheric pressure.

5. The method of Claim 4, wherein the electrochemical reaction is produced in a hermetically sealed space; and the high pressure is produced by confining deuterium and oxygen, which are the products of the electrochemical reaction, whereby the nuclear fusion reaction is carried out under the high pressure.

6. The method of Claim 4, wherein the high pressure is maintained at 1.3 to 200 atm, and the electrical energy is applied with a duty ratio of 0.1% to 100%.

7. An electrochemical nuclear fusion reaction apparatus comprising a reaction vessel having a pair of electrodes disposed therein and adapted to hold a solution containing at least one member selected from the group of heavy water and deuterium therein, so that the pair of electrodes are immersed in the solution, an electrical energy device for applying electrical energy across the electrodes to produce an electrochemical reaction for a nuclear fusion reaction, and a means to produce a high pressure greater than atmospheric pressure in the reaction vessel.

8. The electrochemical nuclear fusion reaction apparatus of Claim 7, wherein the reaction vessel is hermetically sealed, so that the high pressure in the reaction vessel is produced by confining deuterium and oxygen, which are the products of the electrochemical reaction, whereby the nuclear fusion reaction may be carried out under the high pressure.

9. The electrochemical nuclear fusion reaction apparatus of Claim 8, wherein a shield plate means is provided to prevent the deuterium and oxygen from being mixed.

# F I G . 1